# EUROPEAN PATENT SPECIFICATION

(11) **EP 1 247 770 B1**
(45) Date of publication and mention of the grant of the patent: **19.10.2005**
(21) Application number: 02006692.4
(22) Date of filing: 27.03.2002
(51) Int. Cl.: B65G 47/90

(54) **Apparatus for transferring fruit products from one conveyor to another conveyor arranged at right angles to the first one**
Vorrichtung zur Übertragung von Früchten von einem ersten Förderer auf einen zweiten, welcher rechtwinklig zu dem ersten angeordnet ist
Dispositif de transfert de fruits entre deux convoyeurs arrangés à angle droit

(30) Priority: 03.04.2001 IT BO010199
(43) Date of publication of application: 09.10.2002
(73) Proprietor: SACMI COOPERATIVA MECCANICI IMOLA SOCIETA' COOPERATIVA in breve SACMI IMOLA S.C., 40026 Imola (IT)
(72) Inventor: Albonetti, Danilo, 40026 Imola (Prov. of Bologna) (IT)
(74) Representative: Modiano, Guido

(56) References cited:
- EP-A- 0 876 957
- US-A- 5 381 884
- US-A- 5 579 893

## Description

The present invention relates to an apparatus for transferring fruit products from one conveyor to another conveyor arranged at right angles to the first one.

It is known that in the processing of fruit (apples, pears, peaches, kiwis, et cetera) it known to use grading machines that sort the individual fruits according to various criteria, such as size and ripeness.

In order to allow uniform selection criteria, the fruit, before reaching the grading machines, is pre-orientated in appropriately provided machines, known as orienters, which arrange the fruits so that they all have the same orientation.

US-A-5 579 893 discloses a transfer device which continually grasps a group of aluminum cans, standing single file on a first belt and conveyed in a first direction, and which transfers them and drops them on a second belt conveying in a second direction perpendicular to the first conveyance direction of the first belt, such that the aluminum cans are arranged on the second belt in a plurality of parallel extending rows. The transfer device comprises a beam-shaped pickup mechanism having suction slits on its underside for grasping the cans, and a pair of pivoting drive linkages which move the pickup mechanism along a curved track to perform the grasping and dropping operations, wherein the pickup mechanism moves synchroneously with the first belt during the pickup process and with the second belt during the depositing process.

The aim of the present invention is to provide an apparatus that allows to transfer already-oriented products from one conveyor to another without spoiling or compromising the orientation of the fruits.

Within this aim, an object of the present invention is to provide an apparatus that has a simple and therefore low-cost structure, is safe in use, reliable in operation, and easily adaptable to fruit products of various kinds.

This aim and this and other objects that will become better apparent hereinafter are achieved with an apparatus for transferring fruit products as defined in the appended claim 1 or claim 2.

Further characteristics and advantages of the present invention will become better apparent from the following description of two embodiments thereof, illustrated only by way of non-limitative example in the accompanying drawings, wherein:
Figure 1 is a schematic plan view of an apparatus according to a first embodiment of the invention;
Figure 2 is a side elevation view of the apparatus according to Figure 1;
Figure 3 is a side elevation view of the grip elements in the position for picking the products from the feeder conveyor;
Figure 4 is a side elevation view of the grip elements in the position for releasing the products onto the receiving conveyor;

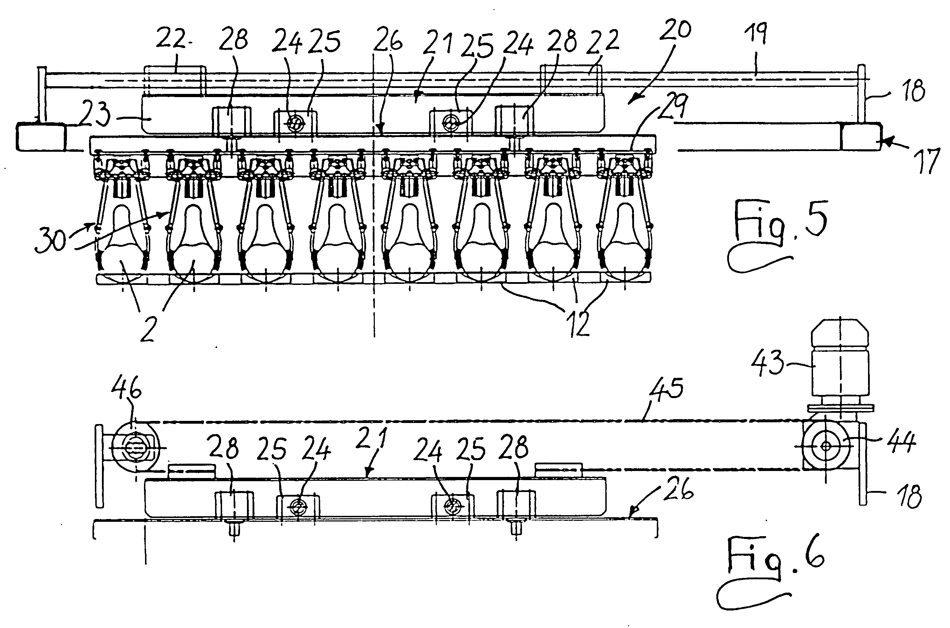

Figure 5 is a front elevation view of the grip elements;
Figure 6 is a view of the actuation means of the carriage;
Figure 7 is an enlarged-scale view of the picking elements;
Figure 8 is a front elevation view of a second embodiment of the apparatus with the grip elements in the position for picking the products from the receiving conveyor;
Figure 9 is a side elevation view of the embodiment of Figure 8.

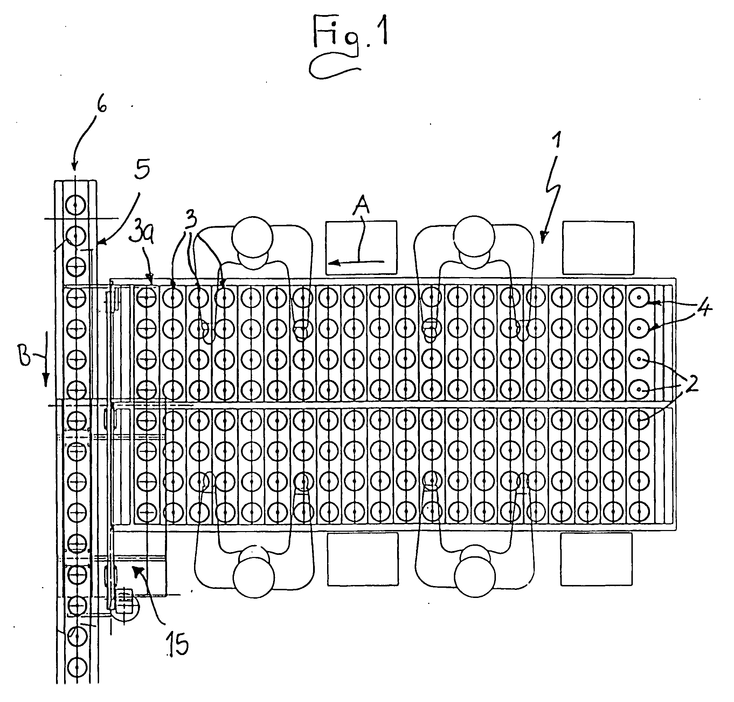

With reference to Figure 1, the apparatus comprises a conveyor 1 for feeding fruit products 2, which advances in a direction A and on which the products are arranged along mutually equidistant transverse parallel rows 3 at right angles to the direction A. The products of the transverse rows 3 form longitudinal rows 4, i.e., rows that are parallel to the direction A.

At the output of the conveyor 1 there is a receiving conveyor 5, which advances in a direction B, which is perpendicular to the direction A, and is suitable to receive the products arranged along a single row 6 in the direction B. Both conveyors 1 and 5 are actuated with a continuous motion.

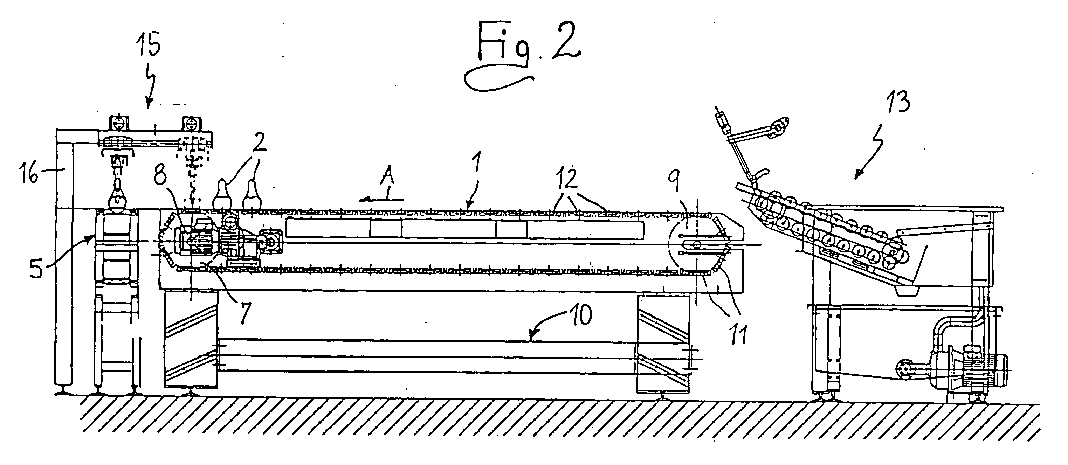

The conveyor 1 (see Figure 2) is constituted by a belt, which is closed in a loop around a driving pulley 7, which is actuated by a gearmotor 8, and around a driven pulley 9, both pulleys being supported on a footing 10. The belt is composed of articulated segments 11, onto which trays or the like 12 are fixed; said trays have receptacles that are shaped complementarily to the products 2.

The products 2 are fed to the conveyor 1 by an orienting machine 13, which is arranged upstream and has a conventional structure. The machine 13 orientates all the fruits in the same direction, preferably with the stalk upward.

The conveyor 5 has an articulated structure similar to the structure of the conveyor 1, on which there are trays 14 for supporting the products whose mutual distance is equal to the distance between the longitudinal rows 4.

In order to transfer the products from the feeder conveyor 1 to the receiving conveyor 5, there is a transfer device, generally designated by the reference numeral 15, which is composed of a framework formed by posts 16 from the top of which a frame comprising two arms 17, adequately reinforced by cross-members, protrudes horizontally so as to lie above the output of the conveyor 1.

Flanges 18 are fixed to the two arms 17, and the ends of two parallel bars 19 are fixed to the flanges, act as guides and slidingly support a carriage, which is generally designated by the reference numeral 20. The bars 19 are perpendicular to the direction A of the conveyor 1.

The carriage 20 is composed of a rectangular slider 21 and is provided in an upward region with bushes 22 for slidingly supporting it on the bars 19.

The slider 21 has, in a downward region, two parallel wings 23, which protrude along the edges that are perpendicular to the direction A and in which a further pair of guiding bars 24, perpendicular to the bars 19, is supported.

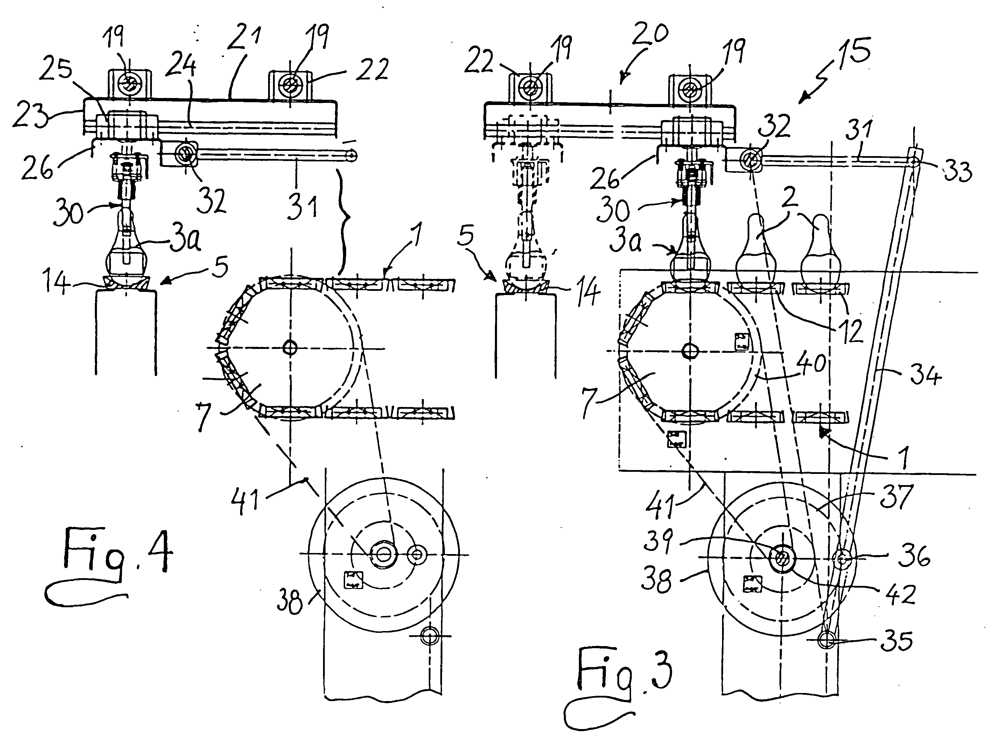

Two bushes 25 can slide on the bars 24, and a second slider 26 is fixed in a downward region to said bushes and, as shown more clearly by Figures 3 and 4, is constituted by a profiled element shaped like an inverted U.

The slider 26 is crossed by the vertical stems 27 of two pneumatic jacks 28 mounted thereon. A beam 29 having an L-shaped cross-section is monolithically suspended from the stems 27; a plurality of grip elements 30 are fixed below the beam, and their number is equal to the number of transverse rows 3 of the products 2 on the conveyor 1; their mutual distance is equal to the distance between the longitudinal rows 4.

By virtue of the sliding of the slider 26 along the bars 24 and the sliding of the slider 21 along the bars 19, the grip elements 30 can move between a position in which they lie above the row that exits from the conveyor 1, at which the products 2 that compose the row 3 that exits from the feeder conveyor 1 are picked, and a position in which they lie above the receiving conveyor 5 in order to transfer the picked products onto it.

To pick the products of the row in output from the conveyor 1, which is designated by the reference numeral 3a hereinafter for the sake of clarity, and deposit them on the receiving conveyor 2, the grip elements 30 are lowered and raised by means of the pneumatic jacks 28, while to transfer the products from the conveyor 1 onto the conveyor 2 there is an alternative actuation assembly, composed of a linkage 31 which, with one end, is articulately and slidingly coupled to a guiding rod 32, which is fixed laterally to the slider 26 and parallel to the bars 19.

The other end of the linkage 31 is articulately connected to the top 33 of a lever 34, the opposite end 35 of which is pivoted to the footing 10. A roller 36 is mounted on the lever 34, in a position that is intermediate between the ends 33 and 35, and engages a slot 37 of a disk 38 which is keyed to a shaft 39 that is rotatably supported in the footing 10. The slot 37 constitutes a radial cam which, by virtue of the rotation of the shaft 39, imparts to the lever 34 an oscillating motion whose extent is such as to move the slider 26 between a position in which the grip elements 30 are vertically aligned with a transverse row 3 of products in output from the conveyor 1 and a position in which the grip elements 30 overlap the receiving conveyor 5. The rotation of the disk 38 and therefore of the cam 37 is derived from a sprocket 40, which is keyed to the supporting shaft of the driving pulley 8, by means of a chain 41 which is closed in a loop around a pinion 42, which is keyed to the shaft 39. Conveniently, the rule of motion of the stroke of the grip elements 30 is such that said grip elements, at least along the initial portion where the products 2 are picked from the conveyor 1, follow the products at zero relative speed.

Once the products have been picked from the trays 12 of the conveyor 1 and transferred above the receiving conveyor 5, the grip elements 30 are made to move in the same direction B in which the receiving conveyor 5 advances. This movement is achieved by means of a motorization assembly, which consists of a gearmotor 43 applied to the flange 18, on the output shaft of which a toothed pulley 44 is keyed in order to drive a toothed belt 45 that runs parallel to the bars 19. The belt 45 is wound around a guiding pulley 46, which is rotatably supported on the other flange 18, and its opposite ends are fixed to the slider 21 of the carriage 20.

The gearmotor 43 is controlled so as to be synchronized with the receiving conveyor 5 so as to be able to align the products 2 carried by the grip elements 30 with the receptacles 14 and allow, by lowering the grip elements 30 onto the conveyor 5, to deposit the row of picked products into the receptacles 14.

The operation of the described apparatus, while being already easy to deduce from the description of the operation of the individual assemblies, can be summarized as follows.

The products, supplied by the orienter 13, are introduced in the receptacles of the trays 12 so as to fill completely all the transverse rows 3 that compose the conveyance plane of the conveyor 1.

When a transverse row 3 reaches the output of the conveyor 1, the slider 26, by virtue of the actuation of the jacks 28, is lowered in order to allow the grip elements 30 to grip the individual products 2 which, by virtue of the subsequent lifting of the slider 26 by the jacks 28, are picked from the respective trays 12. Then, by means of the lever system 31, 34 actuated by the cam 37, the grip elements 30 are transferred onto the conveyor 5 and accelerated by the transmission elements 43-45 in the direction B until they reach the speed of the receiving conveyor 5. Naturally, the transmission elements 43-45 are synchronized with the grip elements 30, so as to provide a vertical alignment with the receptacles 14, so that when the jacks 28 are activated again, the products are deposited in the receptacles of the trays 14.

Once this step has ended, by way of reverse movements the grip elements 30 are returned to the position for picking the products from the conveyor 1 and the cycle is repeated as described for each row of products that reaches the output of the conveyor 1.

It is evident that the described embodiment of the invention perfectly achieves the intended aim and object. In particular, it is noted that the products maintain their orientation and can be moved at a constant speed toward the grading machine downstream of the conveyor 5.

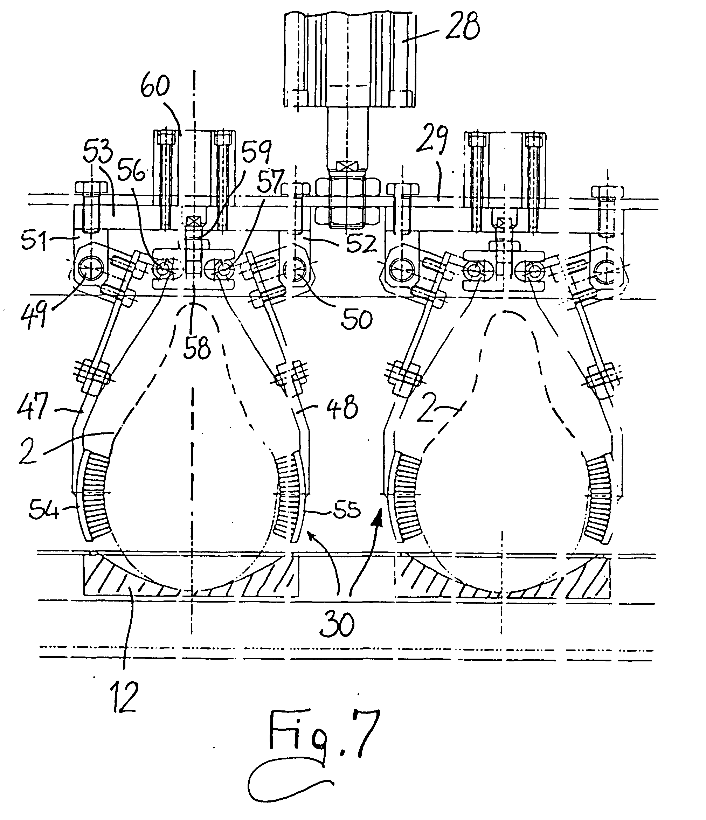

The structure of the grip elements 30 is chosen according to the type of product to be transferred. Figure 7 is a view of a grip element that is particularly suitable to grip fruit products such as apples, pears, kiwis and the like.

Such element is composed of two levers 47 and 48, which are articulated by means of pivots 49, 50 in the prongs 51 and 52 of a bracket 53 fixed below the beam 26. The levers 47, 48 have, at their free ends, respective jaws 54, 55 and respective rollers 56 and 57 proximate to the pivots 49 and 50, in a position that is centered toward the centerline C. Said rollers are engaged in recesses of a body 58 which is fixed to the end of a stem 59 of a pneumatic jack 60 which is fixed above the bracket 53.

Preferably, the jaws 54, 55 are constituted by brushes shaped like a scoop that is cambered complementarily to the products, so that by activating the jack 60 so as to draw the stem 39 upward, the jaws can grip and retain effectively the products and release them when the stem is pushed downward.

The described apparatus is susceptible of numerous modifications and variations.

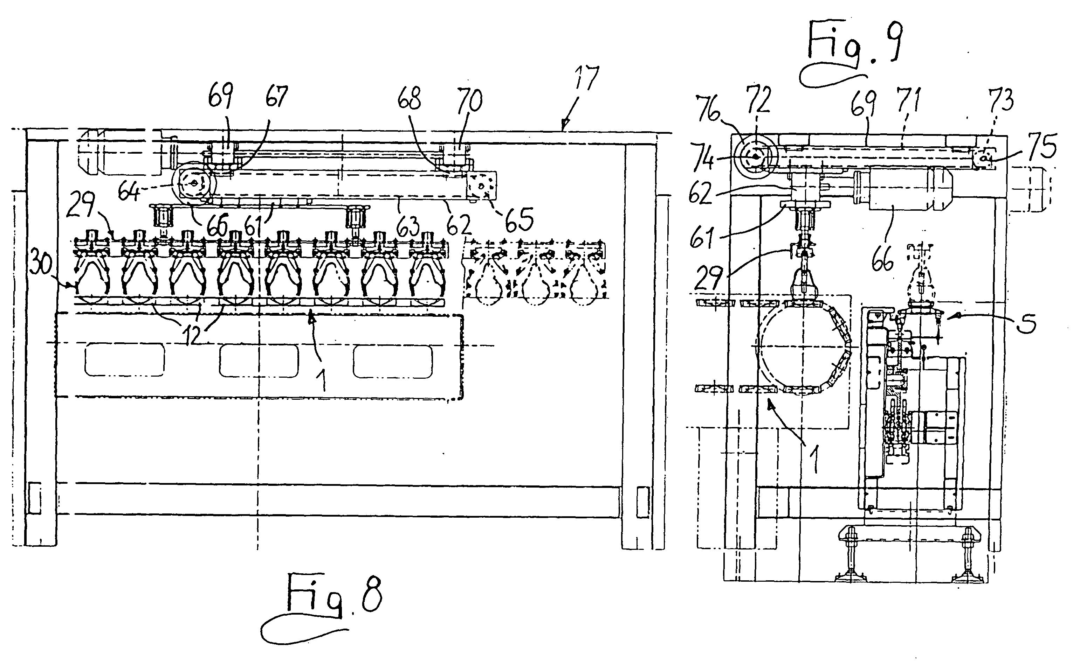

Figures 8 and 9 are views of a carriage in which the movement of the beam 29 that supports the grip elements 30 is achieved by fixing the beam 29 to a slider 61 that can slide in a guide 62 that lies in the direction B of the conveyor 5.

A toothed belt 63 is coupled to the slider 61 and is closed in a loop around two pulleys 64 and 65, which can rotate at the opposite ends of the guide 62 and in which the pulley 64 is actuated by a gearmotor 66.

The guide 62 is in turn supported, at its opposite ends, by two respective sliding blocks 67, 68, which can slide in respective guides 69, 70 that are perpendicular to the guide 62 and rigidly coupled to the stationary framework.

The movement of each sliding block 67, 68 along the guides 69, 70 is provided by means of a respective belt 71, which is wound around two pulleys 72, 73 which are keyed on the respective shafts 74, 75, which are supported in the framework, the shaft 74 being actuated by a gearmotor 76.

From the above description it is evident that by actuating the gearmotor 76 the grip elements 30, after gripping the products of the row 3 in output from the conveyor 1, are transferred with the same alignment by the conveyor 1 onto the conveyor 5, where by virtue of the gearmotor 66 they are accelerated in the direction B at the same speed as, and in step with, the conveyor 5 in order to allow the deposition of the products in the receptacles 14.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for transferring fruit products (2) comprising
a feeder conveyor (1) provided with elements (12) for supporting the products (2) along rows (3) that are perpendicular to an advancement direction (A) of said feeder conveyor (1);
a receiving conveyor (5) that is perpendicular thereto, provided with supporting elements (14) that are arranged along at least one row (6) that is parallel to an advancement direction (B) of said receiving conveyor (5) and perpendicular to the advancement direction (A) of said feeder conveyor (1);
a transfer device (15) comprising a supporting beam (29) for a plurality of grip elements (30) suitable to grip at least one row (3a) of equidistant products(2), said beam (29) being connected to actuators (28) which are mounted on a first slider (26), which can slide on first guides (24) that are parallel to the advancement direction (A) of said feeder conveyor (1), said first guides (24) being supported by a second slider (21) which can slide on second guides (19) which are parallel to the advancement direction (B) of said receiving conveyor (5), said actuators (28) being suitable to actuate said beam (29) between a lowered position for picking a row (3a) of products (2) from said feeder conveyor (1) to a raised position for transferring the products (2) onto said receiving conveyor (5) and between said raised position and a lowered position for releasing the products (2) onto said receiving conveyor (5), the transfer device (15) further comprising means for moving said beam (29) between a picking position, wherein said grip elements (30) grip at least one row (3a) of products (2) at the output of said feeder conveyor (1), and a release position, in which said grip elements (30) are aligned with said receiving conveyor (5), said beam (29) in said release position being moved at the same speed as and in step with said receiving conveyor (5) in order to allow to deposit said row (3a) of picked products (2) onto said receiving conveyor (5) with zero relative speed.

2. An apparatus for transferring fruit products (2) comprising
a feeder conveyor (1) provided with elements (12) for supporting the products (2) along rows (3) that are perpendicular to an advancement direction (A) of said feeder conveyor (1);
a receiving conveyor (5) that is perpendicular thereto, provided with supporting elements (14) that are arranged along at least one row (6) that is parallel to an advancement direction (B) of said receiving conveyor (5) and perpendicular to the advancement direction (A) of said feeder conveyor (1);
a transfer device (15) comprising a supporting beam (29) for a plurality of grip elements (30) suitable to grip at least one row (3a) of equidistant products(2), said beam (29) being connected to actuators (28) which are mounted on a first slider (61), which can slide in a first guide (62) that is parallel to the advancement direction (B) of said receiving conveyor (5), said first guide (62) being supported by two sliding blocks (67, 68) which can slide in respective second guides (69, 70) which are parallel to the advancement direction (A) of said feeder conveyor (1), said actuators (28) being suitable to actuate said beam (29) between a lowered position for picking a row (3a) of products (2) from said feeder conveyor (1) to a raised position for transferring the products (2) onto said receiving conveyor (5) and between said raised position and a lowered position for releasing the products (2) onto said receiving conveyor (5), the transfer device (15) further comprising means for moving said beam (29) between a picking position, wherein said grip elements (30) grip at least one row (3a) of products (2) at the output of said feeder conveyor (1), and a release position, in which said grip elements (30) are aligned with said receiving conveyor (5), said beam (29) in said release position being moved at the same speed as and in step with said receiving conveyor (5) in order to allow to deposit said row (3a) of picked products (2) onto said receiving conveyor (5) with zero relative speed.

3. The apparatus according to claim 1, **characterized in that** said means for moving said beam (29) comprises a lever system (31-36) which is actuated by a cam (37-38) for actuating said first slider (26).

4. The apparatus according to claim 2, **characterized in that** said means for moving said beam (29) comprises a belt drive (63) actuated by a first gearmotor (66) for actuating said first slider (61) and two belt drives (71) actuated by a second gearmotor (76) for actuating respectively said two sliding blocks (67,68).

5. The apparatus according any one or more of the preceding claims, **characterized in that** each one of said grip elements (30) comprises two levers (47,48) which are oppositely articulated on said beam (29) and are actuated by an actuator (60) supported on said beam (29), said levers (47,48) being provided with jaws (54,55) that are shaped complementarily to said fruit products (2).

6. The apparatus according to any one or more of the preceding claims, **characterized in that** said supporting elements (12,14) for the fruit products (2) of said feeder conveyor (1) and said receiving conveyor (5) are trays fixed on articulated segments (11) of a belt.

7. The apparatus according to any one or more of the preceding claims, **characterized in that** said beam (29), follows the products (2) on said feeder conveyor (1) at zero relative speed at least along an initial portion where the products (2) are picked from said feeder conveyor (1).

## Patentansprüche

1. Eine Vorrichtung zum Übergeben von Frucht-Produkten (2), die folgendes umfasst:
ein Übergabeband (1), das ausgestattet ist mit Elementen (12) zum Halten der Produkte (2) entlang Reihen (3), die rechtwinklig zu einer Fortbewegungs-Richtung (A) des Übergabebands (1) sind;
ein Aufnahmeband (5), das rechtwinklig dazu ist, ausgestattet mit Halte-Elementen (14), die entlang mindestens einer Reihe (6) angeordnet sind, die parallel zu einer Fortbewegungs-Richtung (B) des Aufnahmebandes (5) und rechtwinklig zur Fortbewegungs-Richtung (A) des Übergabebandes (1) ist;
eine Übergabe-Vorrichtung (15), die einen Tragbalken (29) für eine Vielzahl von Greifelementen (30) umfasst, die geeignet sind, mindestens eine Reihe (3a) von gleich entfernten Produkten (2) zu greifen, wobei der Balken (29) mit Betätigungselementen (28) verbunden ist, die auf einem ersten Schieber (26) montiert sind, welcher auf ersten Führungen (24) gleiten kann, die parallel zur Fortbewegungs-Richtung (A) des Übergabebandes (1) sind, wobei die ersten Führungen (24) gehalten werden von einem zweiten Schieber (21), der auf zweiten Führungen (19) gleiten kann, welche parallel zur Fortbewegungs-Richtung (B) des Aufnahmebandes (5) sind, wobei die Betätigungselemente (28) geeignet sind, den Balken (29) zwischen einer gesenkten Position zum Aufnehmen einer Reihe (3a) von Produkten (2) vom Übergabeband (1) und einer erhöhten Position zum Übergeben der Produkte (2) auf das Aufnahmeband (5) und zwischen der erhöhten Position und einer gesenkten Position zum Ablegen der Produkte (2) auf dem Aufnahmeband (5) zu bewegen, wobei die Übergabe-Vorrichtung (15) weiter ein Mittel umfasst, um den Balken (29) zwischen einer Aufnahme-Position, worin die Greifelemente (30) mindestens eine Reihe (3a) von Produkten (2) an der Ausgabe des Übergabebandes (1) greifen, und eine Abgabe-Position zu bewegen, in welcher die Greifelemente (30) mit dem Aufnahmeband (5) ausgerichtet sind, wobei der Balken (29) in der Abgabe-Position mit derselben Geschwindigkeit wie das und in Schritt mit dem Aufnahmeband (5) bewegt wird, um es zu ermöglichen, dass die Reihe (3a) von aufgenommenen Produkten (2) auf das Aufnahmeband (5) mit null Relativgeschwindigkeit abgelegt wird.

2. Eine Vorrichtung zur Übertragung von Frucht-Produkten (2), die folgendes umfasst:
ein Übergabeband (1), das mit Elementen (12) zum Halten der Produkte (2) entlang Reihen (3) ausgestattet ist, die rechtwinklig zu einer Fortbewegungs-Richtung (A) des Übergabebandes (1) sind;
ein Aufnahmeband (5), das rechtwinklig dazu ist, ausgestattet mit Halte-Elementen (14), die entlang mindestens einer Reihe (6) angeordnet sind, welche parallel zu einer Fortbewegungs-Richtung (B) des Aufnahmebandes (5) und rechtwinklig zur Fortbewegungs-Richtung (A) des Übergabebandes (1) ist;
eine Übergabe-Vorrichtung (15), die einen Tragbalken (29) für eine Vielzahl von Greifelementen (30) umfasst, die geeignet sind, mindestens eine Reihe (3a) von gleich entfernten Produkten (2) zu greifen, wobei der Balken (29) mit Betätigungselementen (28) verbunden ist, die auf einem ersten Schieber (61) montiert sind, der in einer ersten Führung (62) gleiten kann, die parallel zu der Fortbewegungs-Richtung (B) des Aufnahmebandes (5) ist, wobei die erste Führung (62) von zwei Gleitschuhen (67, 68) gehalten wird, welche in jeweiligen zweiten Führungen (69, 70) gleiten können, die parallel zur Fortbewegungs-Richtung (A) des Übergabebandes (1) sind, wobei die Betätigungselemente (28) geeignet sind, den Balken (29) zwischen einer gesenkten Position zum Aufnehmen einer Reihe (3a) von Produkten (2) vom Übergabeband (1) und einer erhöhten Position zum Übergeben der Produkte (2) auf das Aufnahmeband (5) und zwischen der erhöhten Position und einer gesenkten Position zum Ablegen der Produkte (2) auf das Aufnahmeband (5) zu bewegen, wobei die Übergabe-Vorrichtung (15) weiter ein Mittel umfasst, um den Balken (29) zwischen einer Aufnahme-Position, worin die Greifelemente (30) mindestens eine Reihe (3a) von Produkten (2) an der Ausgabe des Übergabebandes (1) greifen, und einer Abgabe-Position zu bewegen, in welcher die Greifelemente (30) mit dem Aufnahmeband (5) ausgerichtet sind, wobei der Balken (29) in der Abgabe-Position mit derselben Geschwindigkeit wie das und in Schritt mit dem Aufnahmeband (5) bewegt wird, um es zu ermöglichen, dass die Reihe (3a) von aufgenommenen Produkten (2) auf das Aufnahmeband (5) mit null Relativgeschwindigkeit abgelegt wird.

3. Die Vorrichtung gemäß Anspruch 1, **dadurch gekennzeichnet, dass** das Mittel zum Bewegen des Balkens (29) ein HebelSystem (31-36) umfasst, das von einem Nocken (37 - 38) angetrieben wird, um den ersten Schieber (26) anzutreiben.

4. Die Vorrichtung gemäß Anspruch 2, **dadurch gekennzeichnet, dass** das Mittel zum Bewegen des Balkens (29) einen Riemenantrieb (63) umfasst, der von einem ersten Getriebemotor (66) zum Antreiben des ersten Schiebers (61) angetrieben wird, und zwei Riemenantriebe (71) umfasst, die von einem zweiten Getriebemotor (76) angetrieben werden, um die zwei Gleitschuhe (67, 68) jeweils anzutreiben.

5. Die Vorrichtung gemäß einem oder mehreren der obigen Ansprüche, **dadurch gekennzeichnet, dass** jedes der Greifelemente (30) zwei Hebel (47, 48) umfasst, die einander gegenüberliegend gelenkig auf dem Balken (29) gelagert sind und die von einem Betätigungselement (60) angetrieben werden, das auf dem Balken (29) gehalten wird, wobei die Hebel (47, 48) mit Backen (54, 55) ausgestattet sind, die komplementär zu den Frucht-Produkten (2) geformt sind.

6. Die Vorrichtung gemäß einem oder mehreren der obigen Ansprüche, **dadurch gekennzeichnet, dass** die Halte-Elemente (12, 14) für die Frucht-Produkte (2) des Übergabebandes (1) und des Aufnahmebandes (5) Schalen sind, die an gelenkig gelagerten Segmenten (11) eines Bandes befestigt sind.

7. Die Vorrichtung gemäß einem oder mehreren der obigen Ansprüche, **dadurch gekennzeichnet, dass** der Balken (29) den Produkten (2) auf dem Übergabeband (1) mit null Relativgeschwindigkeit, zumindest entlang eines anfänglichen Abschnitts, folgt, wo die Produkte (2) vom Übergabeband (1) genommen werden.

## Revendications

1. Dispositif de transfert de fruits (2) comprenant :
un convoyeur d'alimentation (1) muni d'éléments (12) pour supporter les produits (2) le long de rangées (3) qui sont perpendiculaires à une direction d'avance (A) dudit convoyeur d'alimentation (1) ;
un convoyeur de réception (5) qui est perpendiculaire à ce dernier, muni d'éléments de support (14) qui sont agencés le long d'au moins une rangée (6) qui est parallèle à une direction d'avance (B) dudit convoyeur de réception (5) et perpendiculaire à la direction d'avance (A) dudit convoyeur d'alimentation (1) ;
un dispositif de transfert (15) comprenant une poutre de support (29) pour une pluralité d'éléments de préhension (30) appropriés pour saisir au moins une rangée (3a) de produits (2) équidistants, ladite poutre (29) étant raccordée à des actionneurs (28) qui sont montés sur une première glissière (26) qui peut coulisser sur des premiers guides (24) qui sont parallèles à la direction d'avance (A) dudit convoyeur d'alimentation (1), lesdits premiers guides (24) étant supportés par une seconde glissière (21) qui peut coulisser sur des seconds guides (19) qui sont parallèles à la direction d'avance (B) dudit convoyeur de réception (5), lesdits actionneurs (28) étant appropriés pour actionner ladite poutre (29) entre une position abaissée pour prélever une rangée (3a) de produits (2) dudit convoyeur d'alimentation (1) et une position relevée pour transférer les produits (2) sur ledit convoyeur de réception (5) et entre ladite position relevée et une position abaissée pour libérer les produits (2) sur ledit convoyeur de réception (5), le dispositif de transfert (15) comprenant en outre des moyens pour déplacer ladite poutre (29) entre une position de prélèvement dans laquelle lesdits éléments de préhension (30) saisissent au moins une rangée (3a) de produits (2) à la sortie dudit convoyeur d'alimentation (1), et une position de dégagement dans laquelle lesdits éléments de préhension (30) sont alignés avec ledit convoyeur de réception (5), ladite poutre (29) dans ladite position de dégagement étant déplacée à la même vitesse que, et en phase avec, ledit convoyeur de réception (5) afin de permettre de déposer ladite rangée (3a) de produits (2) prélevés sur ledit convoyeur de réception (5) avec une vitesse relative nulle.

2. Dispositif de transfert de fruits (2) comprenant :
un convoyeur d'alimentation (1) muni d'éléments (12) pour supporter les produits (2) le long de rangées (3) qui sont perpendiculaires à une direction d'avance (A) dudit convoyeur d'alimentation (1) ;
un convoyeur de réception (5) qui est perpendiculaire à ce dernier, muni d'éléments de support (14) qui sont agencés le long d'au moins une rangée (6) qui est parallèle à une direction d'avance (B) dudit convoyeur de réception (5) et perpendiculaire à la direction d'avance (A) dudit convoyeur d'alimentation (1) ;
un dispositif de transfert (15) comprenant une poutre de support (29) pour une pluralité d'éléments de préhension (30) appropriés pour saisir au moins une rangée (3a) de produits (2) équidistants, ladite poutre (29) étant raccordée à des actionneurs (28) qui sont montés sur une première glissière (61) qui peut coulisser sur un premier guide (62) qui est parallèle à la direction d'avance (B) dudit convoyeur de réception (5), ledit premier guide (62) étant supporté par deux blocs coulissants (67, 68) qui peuvent coulisser dans des seconds guides (69, 70) respectifs qui sont parallèles à la direction d'avance (A) dudit convoyeur d'alimentation (1), lesdits actionneurs (28) étant appropriés pour actionner ladite poutre (29) entre une position abaissée pour prélever une rangée (3a) de produits (2) dudit convoyeur d'alimentation (1) et une position relevée pour transférer les produits (2) sur ledit convoyeur de réception (5) et entre ladite position relevée et une position abaissée pour libérer les produits (2) sur ledit convoyeur de réception (5), le dispositif de transfert (15) comprenant en outre des moyens pour déplacer ladite poutre (29) entre une position de prélèvement dans laquelle lesdits éléments de préhension (30) saisissent au moins une rangée (3a) de produits (2) à la sortie dudit convoyeur d'alimentation (1), et une position de dégagement dans laquelle lesdits éléments de préhension (30) sont alignés avec ledit convoyeur de réception (5), ladite poutre (29) dans ladite position de dégagement étant déplacée à la même vitesse que, et en phase avec, ledit convoyeur de réception (5) afin de permettre de déposer ladite rangée (3a) de produits (2) prélevés sur ledit convoyeur de réception (5) avec une vitesse relative nulle.

3. Dispositif selon la revendication 1, **caractérisé en ce que** lesdits moyens pour déplacer ladite poutre (29) comprennent un système de levier (31-36) qui est actionné par une came (37-38) pour actionner ladite première glissière (26).

4. Dispositif selon la revendication 2, **caractérisé en ce que** lesdits moyens pour déplacer ladite poutre (29) comprennent une transmission par courroie (63) actionnée par un premier moteur à engrenages (66) pour actionner ladite première glissière (61) et deux transmissions par courroie (71) actionnées par un second moteur à engrenages (76) pour actionner respectivement lesdits deux blocs coulissants (67, 68).

5. Dispositif selon une ou plusieurs des revendications précédentes, **caractérisé en ce que** chacun desdits éléments de préhension (30) comprend deux leviers (47, 48) qui sont articulés de manière opposée sur ladite poutre (29) et sont actionnés par un actionneur (60) supporté sur ladite poutre (29), lesdits leviers (47, 48) étant dotés de mâchoires (54, 55) qui sont formées de manière complémentaire par rapport auxdits fruits (2).

6. Dispositif selon une ou plusieurs des revendications précédentes, **caractérisé en ce que** lesdits éléments de support (12, 14) pour les fruits (2) dudit convoyeur d'alimentation (1) et dudit convoyeur de réception (5) sont des plateaux fixés sur les segments articulés (11) d'une courroie.

7. Dispositif selon une ou plusieurs des revendications précédentes, **caractérisé en ce que** ladite poutre (29) suit les produits (2) sur ledit convoyeur d'alimentation (1) à une vitesse relative nulle, au moins le long d'une partie initiale où les produits (2) sont prélevés dudit convoyeur d'alimentation (1).
